# DEMANDE DE BREVET EUROPEEN

(11) **EP 0 893 416 A1**
(43) Date de publication de la demande: **27.01.1999**
(21) Numéro de dépôt: 98401792.1
(22) Date de dépôt: 16.07.1998
(51) Int. Cl.: C03B 37/029

(54) **Diffuseur haut de gaz dans un dispositif de fibrage d'une préforme de fibre optique**

(30) Priorité: 24.07.1997 FR 9709415
(71) Demandeur: ALCATEL ALSTHOM COMPAGNIE GENERALE D'ELECTRICITE, 75008 Paris (FR)
(72) Inventeur: Dieumegard, Anne, 73250 St. Pierre D'Albigny (FR); Lysson, Hans-Jürgen, 41352 Korschenbroich (DE); Mairesse, Arnaud, 62138 Haisnes Lez la Bassée (FR)
(74) Mandataire: Lamoureux, Bernard

(57) **Abrégé**

Dispositif (1) de fibrage d'une préforme (2) de fibre optique comportant:
- une chambre de fibrage (3) dans laquelle ladite préforme (2) est disposée selon un axe (X) sensiblement vertical et peut être déplacée selon ledit axe, et
- un moyen de chauffage (10) de ladite chambre à la température de fibrage,
l'extrémité supérieure de ladite chambre étant munie d'un moyen de diffusion (9) de gaz inerte dans ladite chambre, ledit moyen de diffusion étant sensiblement coaxial à ladite préforme (2) et ladite préforme (2) étant au moins partiellement disposée dans ledit moyen de diffusion, ledit moyen de diffusion comportant au moins un moyen d'injection (11) dudit gaz dans une direction perpendiculaire audit axe, se terminant par une ouverture (11D),
ledit moyen de diffusion étant caractérisé en ce que la vitesse dudit gaz à l'entrée à travers les sections desdites ouvertures (11D) est inférieure à 6 m/s, de préférence inférieure à 3 m/s.

## Description

La présente invention concerne un dispositif de fibrage d'une préforme de fibre optique, et plus particulièrement un tel dispositif de fibrage comportant en sa partie supérieure un moyen de diffusion de gaz.

D'une manière générale, un dispositif de fibrage d'une préforme optique comprend :
- une chambre de fibrage dans laquelle ladite préforme est disposée selon un axe sensiblement vertical et peut être déplacée selon ledit axe, et
- au moins un moyen de chauffage pour porter au moins une partie de ladite chambre à la température de fibrage,
l'étanchéité de l'extrémité supérieure de ladite chambre étant éventuellement assurée par au moins un moyen d'étanchéité,
l'extrémité supérieure de ladite chambre étant munie d'au moins un moyen de diffusion, en général un diffuseur, de gaz inerte dans ladite chambre, de façon à maintenir une atmosphère de gaz inerte dans ladite chambre. Un tel dispositif est par exemple décrit dans les demandes de brevet japonais JP-A-01.018.934 et JP-A-62.176.938.

Dans ces dispositifs, ledit moyen de diffusion peut être sensiblement coaxial à ladite préforme et ladite préforme peut être au moins partiellement disposée dans ledit moyen de diffusion. Ledit moyen de diffusion comporte alors en général au moins un moyen d'injection dudit gaz, ledit moyen d'injection se terminant par une ouverture par laquelle le gaz inerte rentre parallèlement ou perpendiculairement à l'axe de la préforme, dans la chambre de fibrage. La présence de gaz inerte permet en principe d'éviter la détérioration de la chambre de fibrage. La chambre de fibrage comporte typiquement un four en graphite qui est généralement chauffé par induction.

Malgré tout, il existe quelques passages d'air au sein de la chambre de fibrage qui conduisent à la fabrication de matières secondaires non désirées telles que des fines particules de suie. De telles particules, qui se déposent normalement dans le bas du dispositif, en sont empêchées par le gaz inerte qui perturbe le système lors de son entrée dans la chambre de fibrage en créant des turbulences. Par suite on constate une résistance mécanique de la fibre optique, fabriquée par un procédé de fibrage utilisant de tels dispositifs, insuffisante.

Ainsi le problème qui se pose est d'améliorer l'entrée du gaz inerte dans la chambre de fibrage par le moyen de diffusion, de façon à diminuer notablement la présence de turbulences au niveau de ladite entrée. Un autre problème qui se pose est d'améliorer la résistance mécanique des fibres optiques fabriquées par fibrage de préformes. et en particulier de diminuer la fréquence des casses desdites fibres lors de l'opération de renvidage, qui suit l'opération de préformage.

Un des buts de l'invention est de proposer un dispositif de fibrage qui résout le problème posé, en ce qu'il améliore l'entrée des gaz dans la chambre de fibrage et en ce que les fibres optiques fabriquées par fibrage à partir d'un tel dispositif sont de résistance mécanique améliorée par rapport à la résistance mécanique des fibres optiques fabriquées à partir des procédés de fibrage de l'art antérieur.

A cet effet, la présente invention concerne un dispositif de fibrage d'une préforme de fibre optique, comportant :
- une chambre de fibrage dans laquelle ladite préforme est disposée selon un axe sensiblement vertical et peut être déplacée selon ledit axe, et
- au moins un moyen de chauffage pour porter au moins une partie de ladite chambre à la température de fibrage,
l'extrémité supérieure de ladite chambre étant munie d'un moyen de diffusion de gaz inerte dans ladite chambre, de façon à maintenir une atmosphère de gaz inerte dans ladite chambre, ledit moyen de diffusion étant sensiblement coaxial à ladite préforme et ladite préforme étant au moins partiellement disposée dans ledit moyen de diffusion, ledit moyen de diffusion comportant au moins un moyen d'injection dudit gaz dans une direction perpendiculaire audit axe, se terminant par une ouverture,
ledit moyen de diffusion étant caractérisé en ce que la vitesse dudit gaz à l'entrée dans ladite chambre à travers les sections desdites ouvertures est inférieure à 6 m/s, de préférence inférieure à 3 m/s.

Le gaz entrant dans ladite chambre peut être un mélange de gaz inertes. Dans ce cas le mélange est généralement effectué avant l'entrée du gaz dans la chambre de façon à minimiser les risques de turbulence dans ladite chambre.

D'autres caractéristiques et avantages de la présente invention apparaîtront dans la description suivante, donnée à titre illustratif et non limitatif, de deux modes de réalisation du moyen de diffusion présent dans un dispositif de fibrage selon la présente invention.

Dans les figures suivantes,
- la figure 1 est une vue schématique de la partie supérieure d'un dispositif de fibrage comprenant un diffuseur, selon l'invention, qui permet de placer le diffuseur dans son ensemble,
- la figure 2 est une vue du dessous d'un premier mode de réalisation d'un diffuseur, comportant six rainures à ouverture centrale de section rectangulaire,
- la figure 3 est une vue en coupe du même diffuseur que celui de la figure 2,
- la figure 4 est une vue en coupe d'un second mode de réalisation d'un diffuseur, différent du diffuseur selon les figures 2 et 3 seulement en ce qu'il comporte douze rainures à ouverture centrale de section rectangulaire.

Dans toutes ces figures les éléments communs portent les mêmes chiffres de référence.

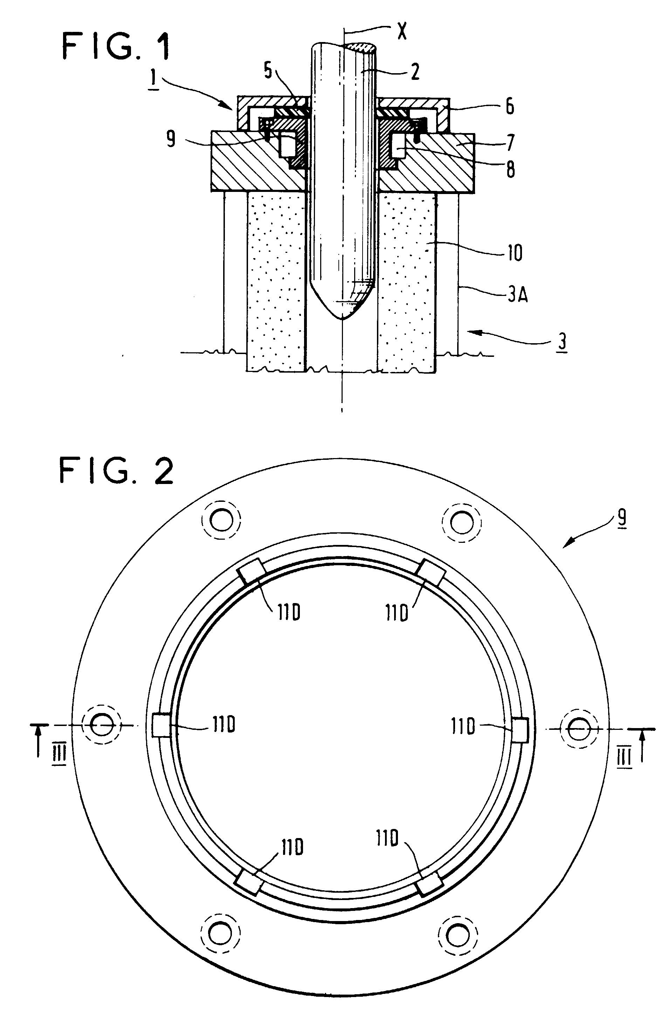

La figure 1 représente partiellement un dispositif de fibrage 1 selon l'invention, pour le fibrage d'une préforme de fibre optique 2 en un matériau vitreux. Le dispositif de fibrage comprend une chambre de fibrage cylindrique 3, représentée seulement en sa partie supérieure 3A, comprenant une ouverture pour le passage de la préforme 2 lors de son déplacement, cette ouverture se trouvant le long de la direction de déplacement de ladite préforme. Le dispositif de fibrage peut comprendre en outre un moyen d'étanchéité, qui est ici et de façon générale un joint d'étanchéité 5, par exemple en graphite. Le joint d'étanchéité 5 se trouve maintenu par une pièce de maintien 6, reposant sur une flasque 7 qui elle-même repose sur la chambre de fibrage 3. La chambre de fibrage 3 comprend des moyens de chauffage adaptés 10, tels que connus de l'homme du métier, permettant de la porter à une température au moins égale à la température de fibrage du matériau vitreux constituant la préforme 2, de sorte que la préforme est fibrée en une fibre optique, au fur et à mesure de son déplacement selon l'axe sensiblement vertical X. Le déplacement de la préforme est généralement assuré par un mandrin (non représenté), auquel la préforme est fixée par exemple par un embout de fibrage.

Au sein de la chambre de fibrage 3, l'arrivée en gaz inerte est assurée par un moyen de diffusion qui est un diffuseur 9, comportant au moins un moyen d'injection. Le diffuseur est selon l'invention, c'est-à-dire que ses moyens d'injections sont tels que la vitesse d'entrée du gaz inerte au travers des sections des ouvertures centrales desdits moyens d'injection dans la chambre de fibrage est inférieure à 6 m/s, de préférence inférieure à 3 m/s.

De préférence, le dispositif selon l'invention est tel que le moyen de diffusion est disposé sensiblement au-dessous dudit moyen d'étanchéité, tel que représenté sur la figure 1 où le diffuseur 9 est maintenu juste au-dessous du joint d'étanchéité 5 au moyen d'une pièce de maintien 6 solidaire de la flasque 7 elle-même solidaire de la chambre de fibrage 3. La flasque 7 combinée au diffuseur 9 aide à créer les canaux dans lesquels circule le gaz, chaque canal consistant en une rainure 11 comportant trois parois parties de la pièce 9, une quatrième paroi étant réalisée par une partie de la flasque 7.

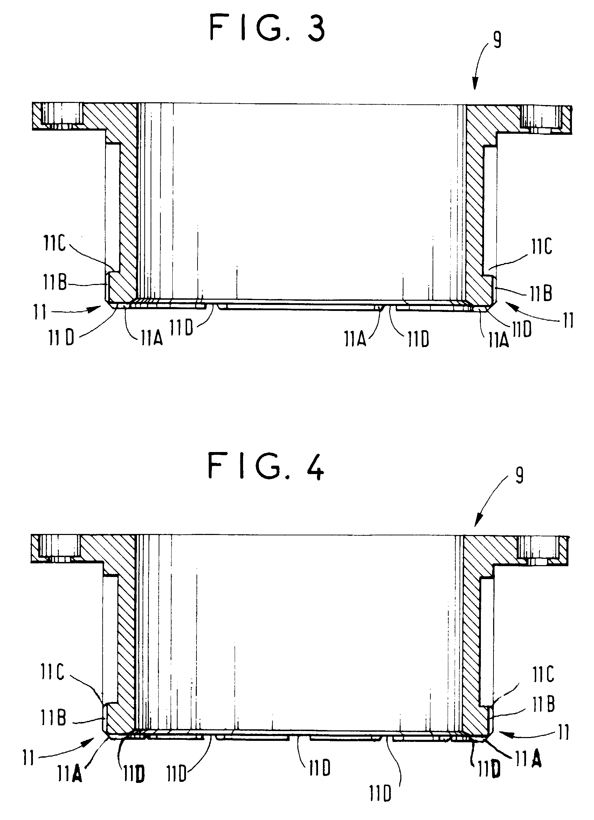

Selon un mode de réalisation du dispositif selon l'invention, ledit dispositif comprend au moins deux moyens d'injection, de préférence de 2 à 20, de façon encore plus préférée de 6 à 16 moyens d'injection. Selon un tel mode de réalisation, lesdits moyens d'injection sont disposés de préférence de telle sorte que des ouvertures 11D extrémités des rainures 11 sont disposées en symétrie centrale par rapport audit axe. Ainsi le diffuseur 9, comporte au moins un moyen d'injection (six dans le cas des figures 2 et 3, et douze dans le cas de la figure 4), tel qu'une rainure 11 (voir figures 2, 3 et 4), qui communique en périphérie du diffuseur avec la chambre de gaz 8 par des ouvertures d'alimentation 11C et au centre par les ouvertures 11D par exemple de forme rectangulaire.

Selon un autre mode de réalisation du dispositif selon l'invention, indépendant ou non du mode de réalisation précédent, au moins un, de préférence tout moyen d'injection comporte au moins un moyen de circulation, 11A et 11B, du gaz disposé sensiblement radialement, par rapport audit axe, reliant l'ouverture 11D à l'ouverture d'alimentation 11C.

Le diffuseur est réalisé en tout matériau adéquat connu de l'homme du métier, par exemple en inox.

Les ouvertures 11D des rainures 11 sont généralement disposées en symétrie centrale par rapport à l'axe X. De plus, les ouvertures 11D des rainures 11 sont le plus souvent situées à proximité de la préforme. Le terme "à proximité" correspond généralement à un cas où les ouvertures centrales sont situées à titre indicatif à moins de 10 à 15 mm pour des préformes de fibres optiques, de diamètre compris généralement entre 40 et 100 mm, ce qui signifie que la différence entre le diamètre intérieur du diffuseur et le diamètre de la préforme de fibre optique 2 est en général inférieure ou égale à 30 mm. En effet, ainsi qu'il est connu de l'homme du métier, les dimensions des dispositifs de fibrages sont adaptées aux dimensions des préformes de fibres optiques à fibrer, de telle sorte que les ouvertures 11D du diffuseur 9 sont proches de la préforme. Par exemple, le diamètre intérieur du diffuseur est de 80 mm (respectivement de 50 mm) pour une préforme de diamètre compris entre 60 et 70 mm (respectivement 40mm)

La figure 2 représente une vue du dessous d'un diffuseur 9 comprenant six rainures 11, dont l'ouverture 11D est de forme rectangulaire. La figure 3 représente une vue en coupe du même diffuseur 9 que celui représenté sur la figure 2. La rainure 11 comprend une partie radiale 11A, prolongée d'une partie sensiblement verticale 11B, elle-même prolongée par une ouverture d'alimentation 11C qui communique avec la chambre de gaz 8. Les ouvertures 11C et 11D sont par exemple de sections identiques.

La figure 4 représente une vue du dessous d'un autre diffuseur 9 comprenant douze rainures 11, dont l'ouverture 11D est de forme rectangulaire.

Par rapport au diffuseur représenté aux figures 2 et 3, les rainures 11 du diffuseur représenté sur la figure 4, et en particulier les ouvertures 11D desdites rainures 11 sont sensiblement de même taille (cas des figures 2, 3 et 4), mais elle peuvent être aussi de taille sensiblement différente. A partir de la section totale d'ouvertures centrales données, on peut très facilement ajuster le débit de façon à ce que la vitesse du gaz à l'entrée dans la chambre à travers les sections desdites ouvertures est inférieure à 6 m/s, de préférence inférieure à 3 m/s, sachant que la vitesse est calculée comme le rapport entre le débit dudit gaz et la section totale (i.e. la somme des sections) desdites ouvertures centrales.

## Revendications

1. Dispositif (1) de fibrage d'une préforme (2) de fibre optique, comportant :
- une chambre de fibrage dans laquelle ladite préforme est disposée selon un axe (X) sensiblement vertical et peut être déplacée selon ledit axe, et
- au moins un moyen de chauffage (10) pour porter au moins une partie de ladite chambre à la température de fibrage,
l'extrémité supérieure de ladite chambre étant munie d'un moyen de diffusion (9) de gaz inerte dans ladite chambre, de façon à maintenir une atmosphère de gaz inerte dans ladite chambre, ledit moyen de diffusion étant sensiblement coaxial à ladite préforme et ladite préforme étant au moins partiellement disposée dans ledit moyen de diffusion, ledit moyen de diffusion comportant au moins un moyen d'injection (11) dudit gaz dans une direction perpendiculaire audit axe, se terminant par une ouverture (11D),
ledit moyen de diffusion étant caractérisé en ce que la vitesse dudit gaz à l'entrée dans ladite chambre à travers les sections desdites ouvertures (11D) est inférieure à 6 m/s.

2. Dispositif selon la revendication 1 tel que la vitesse dudit gaz à l'entrée dans ladite chambre à travers les sections desdites ouvertures (11D) est inférieure à 3 m/s.

3. Dispositif selon l'une des revendications 1 ou 2 tel que ledit dispositif comprend en outre un moyen d'étanchéité (5).

4. Dispositif selon la revendication 3 tel que ledit moyen de diffusion est disposé sensiblement au-dessous dudit moyen d'étanchéité.

5. Dispositif selon l'une des revendications 1 à 4 tel que au moins un moyen d'injection comporte au moins un moyen de circulation (11A,11B) du gaz disposé sensiblement radialement, par rapport audit axe, reliant l'ouverture (11D) à une ouverture d'alimentation en gaz (11C).

6. Dispositif selon l'une des revendications 1 à 5 tel que tout moyen d'injection comporte au moins un moyen de circulation (11A,11B) du gaz disposé sensiblement radialement, par rapport audit axe, reliant l'ouverture (11D) à une ouverture d'alimentation en gaz (11C).

7. Dispositif selon l'une des revendications 1 à 6 comprenant au moins deux moyens d'injection (11).

8. Dispositif selon la revendication 7 comportant de 2 à 20 moyens d'injection (11).

9. Dispositif selon l'une des revendications 7 ou 8 comportant de 6 à 16 moyens d'injection (11).

10. Dispositif selon l'une des revendications 7 à 9 tel que lesdits moyens d'injection (11) sont disposés de telle sorte que les ouvertures (11D) sont disposées en symétrie centrale par rapport audit axe (X).
